(19) **Europäisches Patentamt / European Patent Office / Office européen des brevets**

(11) **EP 2 535 838 A1**

(12) **DEMANDE DE BREVET EUROPEEN**

(43) Date de publication:
**19.12.2012 Bulletin 2012/51**

(51) Int Cl.:
**G06K 7/00** *(2006.01)* **G06K 19/07** *(2006.01)*
**H04L 27/04** *(2006.01)*

(21) Numéro de dépôt: **11305753.3**

(22) Date de dépôt: **16.06.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(71) Demandeur: **Gemalto SA
92190 Meudon (FR)**

(72) Inventeurs:
• **Caruana, Jean-Paul
83500 La Seyne sur Mer (FR)**
• **Capomaggio, Grégory
13360 Roquevaire (FR)**
• **Buton, Christophe
13420 Gemenos (FR)**

(54) **Procédé de communication sans-contact à modulation négative**

(57) La présente invention concerne un procédé de communication radiofréquence entre un transpondeur sans-contact (1A) et un lecteur, dans lequel au moins une bande latérale (BLI) de la fréquence porteuse (Fc) est utilisée pour communiquer une réponse du transpondeur par modulation de l'amplitude (V) de cette fréquence porteuse ; Le procédé se distingue en ce que la modulation applique au moins en partie un taux de modulation supérieur à 100%, ce qui provoque une modulation négative (MOD B).

L'invention concerne également un circuit de communication correspondant.

Fig. 6

Fc
PICC
Mode
Fc
Fc+180°

EP 2 535 838 A1

**Description**

Domaine de l'invention.

L'invention concerne un procédé de communication radiofréquence dans lequel un objet transpondeur radiofréquence communique par modulation de l'amplitude d'une fréquence porteuse.

Elle concerne notamment un procédé de communication radiofréquence dans lequel ledit objet transpondeur génère un signal de modulation de la fréquence porteuse selon une fréquence de sous-porteuse ; Cette modulation se traduit par la création d'au moins une bande latérale de fréquence haute et/ou basse détectée par un lecteur.

L'invention trouve application dans un procédé de communication sans-contact activée ainsi que dans un circuit et dispositif de mise en oeuvre. Elle vise notamment à spécifier les caractéristiques des signaux, des antennes ainsi que le principe de cette nouvelle façon d'utiliser la technologie sans-contact. La communication radiofréquence est en principe de courte portée et effectuée par couplage et induction électromagnétique inférieure de portée de l'ordre de 0,01 voire environ 1 m.

Les circuits et dispositif visés par l'invention peuvent être compris dans des objets portables électroniques par exemple des cartes à mémoire telles que de type SD (de la société Sandisk). De telles cartes sont actuellement utilisées dans une interface carte de téléphones portables pour effectuer une transaction de type sans contact répondant notamment à la norme ISO/IEC 14443 ou 15693, dans la mesure où ces téléphones sont dépourvus d'interface sans contact en sortie d'usine.

L'invention vise également des dispositifs ayant une fonction NFC comme des téléphones portables.

Art antérieur.

Un signal de modulation, modulant au rythme d'une fréquence de sous-porteuse, peut définir plusieurs périodes successives correspondant à un codage de l'information à communiquer; Ces périodes de sous-porteuse génèrent en principe au moins une bande latérale de fréquence porteuse qui est détectée par un lecteur au cours d'une communication.

Dans un domaine particulier de l'invention relatif aux communications radiofréquences selon l'ISO/IEC 14443 ou équivalentes, la modulation fonctionne de la manière ci-après ; A l'intérieur des périodes des signaux de modulation visés précédemment, l'amplitude de la fréquence porteuse est sensiblement non atténuée par le signal de modulation, en principe pendant une demi-période, tandis que pendant l'autre demi-période complémentaire, l'amplitude de la fréquence porteuse est en principe sensiblement atténuée voire complètement par le signal de modulation.

La technologie actuelle ISO/IEC 14443 et NFC acronyme de Near Field Communication (communication radiofréquence de proximité) est basée sur un principe de rétro modulation d'un signal émis par un lecteur.

Selon ce principe, une certaine quantité de champ électromagnétique fournie par un lecteur, doit être modulée par l'objet à puce sans contact de proximité également appelé PICC (acronyme anglais de Proximity Integrated Circuit Card). Afin d'être conforme à la sensibilité du lecteur, une amplitude minimale de champ est requise pour être modulée par l'objet. Cette modulation de la porteuse de lecteur doit générer deux bandes latérales avec une amplitude au moins égale à $22/H^{0,5}$. Pour remplir cette condition, il est nécessaire d'avoir un minimum de couplage entre le lecteur et l'objet pour générer suffisamment de signal de rétro-modulation. Le facteur de couplage est directement dépendant des surfaces de l'antenne du lecteur et de celle de l'objet sans contact.

Dans le cas de très petit objet sans-contact, par exemple, une carte micro SD ou objet de surface sensiblement équivalente, la surface de l'antenne radiofréquence est radicalement trop petite. En outre, ce genre d'objet est destiné à être incorporé dans un dispositif hôte tel un téléphone portable. Cette dernière opération réduit encore plus le couplage de l'objet sans-contact avec le lecteur à cause de l'environnement métallique du téléphone.

En particulier, une communication utilisée entre une carte sans contact appelée PICC et un lecteur sans-contact appelé PCD (Acronyme anglais de Proximity Coupling Device) est basé sur le principe d'une modulation de l'amplitude du champ magnétique généré par le PCD. Ce dernier détecte en retour les variations de cette amplitude et en décode le message produit par le PICC.

Du fait même de ce principe de communication, en particulier du fait que le champ est émis par le lecteur, le taux de modulation résultant est compris entre 0 et 100%.

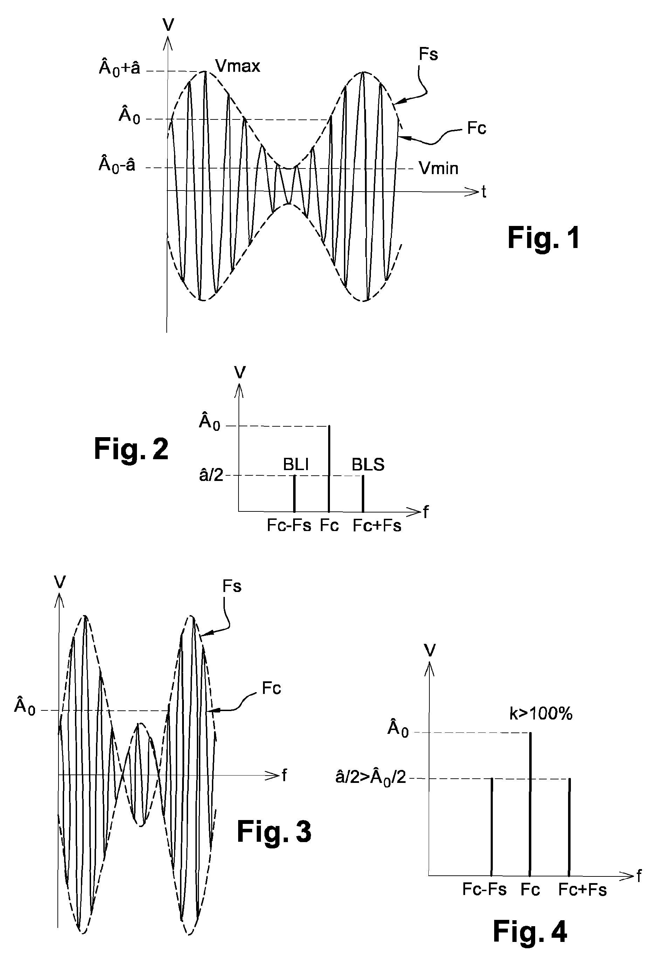

En effet, l'opération de modulation d'amplitude consiste à modifier l'amplitude du champ magnétique produite par le lecteur a une fréquence Fc = 13,56 MHz selon celle de l'onde Fs ou signal modulant correspondant au message du PICC. La forme du signal modulant est ainsi présentée sur le schéma illustré à la figure 1.

L'expression du signal modulé en amplitude AM peut s'écrire sous la forme:

$$h(t) = \left[\hat{A}_0 + m(t)\right]\cos(\omega_0 t) = \hat{A}_0 \cos(\omega_0 t)\left[1 + \frac{\hat{a}}{\hat{A}_0}\cos \omega t\right]$$

« k » représente le taux de modulation et s'exprime par

$$k = \frac{\hat{a}}{\hat{A}_0} = \frac{a}{A_0}$$

Une opération simple sur l'expression h(t) permet d'écrire celle-ci comme la somme de fonctions sinusoïdales. On peut donc représenter à la figure 2, le spectre du signal sous la forme de trois raies : la raie centrale Fc appelée "porteuse" et deux raies latérales Fc - Fs et Fc + Fs, caractérisant le signal modulant illustré.

La manière de qualifier la capacité d'un transpondeur radiofréquence PICC à répondre à un lecteur PCD s'appuie sur une analyse spectrale par le PCD du champ ainsi modulé.

L'amplitude des deux bandes latérales BLI (bande latérale inférieure) et BLS (bande latérale supérieure) est normalisée à travers les textes de l'ISO/IEC 14443. Cette grandeur fait partie des critères de test des transpondeurs sans-contact, vérifiés lors s de la réalisation des mesures tel que décrit dans la norme de test ISO/IEC 10373-6.

Dans les communications des transpondeurs sans contact de proximité, la fréquence de la porteuse appelée ici (Fc) est normalisée. Sa valeur est de 13,56 MHz. Le signal modulant basse fréquence est un signal binaire représentant une sous-porteuse de fréquence Fc/16, sensiblement égale à 847 KHz. Cette sous-porteuse est appelée dans le reste du document Fs. La sous-porteuse Fs est utilisée de deux manières différentes pour coder le message binaire. Ces deux manières sont appelées type A et type B dans la norme sans contact de proximité.

La distance de communication de ce type de transpondeur est un critère important pour certaines applications. Une distance acceptable peut être très difficile voire impossible à atteindre dans les cas ou la surface de l'antenne est faible. La taille de l'antenne du transpondeur est en effet un élément clé des distances de communication des lecteurs PCD vers les objets PICC.

C'est le cas bien connu de certains téléphones dits" NFC", mais plus encore lorsque le transpondeur et son antenne doivent être intégrés dans un objet très petit tel qu'une carte mémoire de type μSD. Dans ce type d'objet, la taille de l'antenne ne permet pas une communication passive entre le transpondeur et le lecteur sans contact.

Dans ce type de produit très petit, l'usage d'une modulation activée utilisant une source d'alimentation locale (par rapport à l'objet) permet d'obtenir une distance de communication parfois acceptable malgré le format très petit.

Le brevet EP1801741 (B1) décrit un procédé de génération d'un champ électromagnétique propre par un support de données portable (transpondeur), dans lequel la transmission de données à un lecteur s'effectue dans un mode de communication activée et dans lequel la transmission de champ électromagnétique propre de l'objet est vue par le lecteur comme une modulation du champ du lecteur. Toutefois, cette solution ne semble pas être décrite complètement ou ne pas fonctionner correctement comme décrit.

Les demandes de brevet de la déposante EP 11305453.0 et EP 11305454,8 sont incorporées ici notamment en ce qui concerne la description des modes de réalisation de communication activée et agencement d'antennes.

Par cette modulation, au moins une ou en principe deux bandes latérales apparaissent respectivement situées à *Fc-Fs,* et *Fc+Fs.* L'amplitude des bandes latérales est en principe limitée à la moitié du maximum d'amplitude de la fréquence porteuse.

L'invention a pour objectif d'améliorer la communication radiofréquence des objets visés ci-dessus.

Résumé de l'invention.

Dans son principe, l'invention parvient, contre toute attente, à une amélioration de la communication par une augmentation de l'amplitude de la modulation générée par un objet sans-contact. Autrement dit, l'invention propose un procédé de modulation de la porteuse locale du transpondeur radiofréquence qui augmente l'amplitude des bandes latérales par rapport à celle de la porteuse ; Pour rappel, dans l'art antérieur cette amplitude était limitée à 50 % de l'amplitude de la fréquence porteuse du lecteur capté par l'antenne du PICC.

Selon le principe du procédé, le signal modulant du transpondeur PICC (ou tout dispositif émulant un transpondeur radiofréquence) provoque une variation de l'amplitude de la porteuse locale du PICC qui est comprise entre 0 et 200% de sa valeur limite maximale visée ci-dessus. Le procédé de l'invention met en oeuvre une sur-modulation, (ou modulation négative), le taux de modulation étant supérieur à 100%.

Dans l'application à une communication activée, l'invention propose de générer indépendamment du lecteur au moins une des deux bandes latérales pour que le lecteur puisse détecter le signal de rétro-modulation provenant de l'objet sans contact (PICC). Le circuit de communication renvoie un signal porteur modulé par le signal de réponse par modulation de charge de l'objet sans contact ; De préférence, la modulation de ce signal porteur peut être amplifiée pour alimenter une antenne d'émission.

A cet effet, l'invention a donc pour objet un procédé de communication entre un transpondeur sans-contact et un lecteur, dans lequel au moins une bande latérale de la fréquence porteuse est utilisée pour communiquer une réponse du transpondeur par modulation de l'amplitude de cette fréquence porteuse ; Le procédé se distingue en ce que la modulation applique au moins en partie un taux de modulation supérieur à 100 %, ce qui provoque une modulation négative.

Selon d'autres caractéristiques du procédé,

- Le procédé met en oeuvre une étape de génération ou d'extraction de la fréquence porteuse par l'objet portable, ladite fréquence étant synchrone avec la fréquence d'interrogation du lecteur, et la mise en oeuvre de ladite modulation négative s'effectuant pendant au moins une partie d'alternance d'un signal de modulation ;
- Ledit objet transpondeur génère un signal de modulation cadencé à une fréquence de sous-porteuse, ladite modulation générant au moins une desdites bandes latérales;
- Ledit signal de modulation comprend au moins une alternance ou plusieurs, l'application de ce signal de modulation provoquant :

  - une modulation d'amplitude d'un taux proche de zéro, au cours d'une première partie de première demi-alternance de signal de modulation,
  - une modulation négative ou équivalente d'amplitude d'un taux supérieur à 100 % et inférieur ou égal à 200 %, au cours d'une seconde partie d'une seconde demi-alternance opposée à ladite première demi-alternance;

- La modulation négative génère également un déphasage de la fréquence porteuse supérieur à 0° et sensiblement inférieur ou égal à 180 ° ;
- Le taux de ladite modulation négative est sensiblement égal à 200 % et le déphasage sensiblement égal à 180 °.

L'invention a également pour objet un circuit de communication sans-contact correspondant au procédé selon les revendications 7 à 15. Le circuit de communication sans-contact est configuré pour générer au moins une bande latérale de la fréquence porteuse et l'utiliser pour communiquer une réponse du transpondeur par modulation de l'amplitude de cette fréquence porteuse ; Le circuit se distingue en ce qu'il est configuré pour appliquer au moins en partie la modulation avec un taux de modulation supérieur à 100%, ce qui provoque une modulation négative (MOD B).

Les bénéfices qu'apporte l'invention sont importants. Les distances de fonctionnement entre le lecteur PCD et l'objet transpondeur PICC sont fortement accrues. Grâce à cette modulation négative, l'amplitude de la réponse de l'objet portable PICC pouvant être doublée, l'invention a l'avantage d'atteindre des distances de communication bien supérieures à celles permises antérieurement.

L'invention permet également de diminuer très fortement la taille de l'antenne de l'objet portable PICC tout en maintenant une distance de communication importante.

En outre, l'invention permet de diminuer le courant à appliquer à l'objet transpondeur pour répondre avec une amplitude conforme aux exigences des normes.

L'invention est particulièrement adaptée, mais pas exclusivement, à des cartes micro-SD de type sans-contact. Grâce à l'invention on réalise un bon couplage entre un lecteur et un objet de type PICC (carte SD) ; En outre, elle est facile à mettre en oeuvre avec un minimum de modification ; L'invention s'applique notamment à toute puce à interface duale habituelle.

Brève description des figures.

- La figure 1 illustre la forme d'un signal modulant de l'art antérieur décrit dans le préambule de la demande ;
- La figure 2 illustre le spectre du signal modulé correspondant à la figure 1 ;
- Les figures 3 et 4 illustrent l'application du principe de modulation négative aux communications radiofréquences entre un objet portable et un lecteur selon l'invention ;
- Les figures 5 et 6 illustrent les signaux respectivement modulant et modulé résultant de l'application du principe ci-dessus aux communications de type A ou B selon l'ISO/IEC 14443 ou 18092 ou 21481 ;
- La figure 7 illustre une comparaison de la modulation selon l'invention par rapport à une modulation classique de l'art antérieur ;
- Les figures 8 et 9 illustrent respectivement une comparaison entre une représentation spectrale des bandes latérales sans modulation négative et celles obtenues par l'invention ;
- La figure 10 illustre une partie de circuit de réception conforme à un mode de réalisation de l'invention ;
- La figure 11 illustre une vue d'un circuit radiofréquence RF conforme à un mode de réalisation de l'invention utilisant un élément de sécurité sans-contact SE ;
- La figure 12 illustre les principes de codage de la modulation de charge de type A et type B de l'art antérieur ;
- Les figure 13 et 14 (fig. 13 élargie) illustrent un message en type A d'un objet portable démodulé par un étage spécifique du circuit radiofréquence de l'invention ;
- La figure 15 illustre la fréquence porteuse modulée selon le principe de la modulation négative de l'invention à partir du signal modulant de la figure 14 ;

- La figure 16 illustre une correspondance entre le signal de porteuse Fc, le signal de l'objet portable (PICC) et le signal de modulation obtenu (Mod) selon un mode préféré de mise en oeuvre de l'invention ;
- La figure 17 illustre un circuit électronique permettant de mettre en oeuvre un mode de mise en oeuvre préféré du procédé de l'invention ;
- La figure 18 illustre une carte SD comprenant un circuit électronique radiofréquence à modulation activée susceptible de mettre en oeuvre, le cas échéant, la modulation négative de l'invention ;
- La figure 19 illustre une vue plus détaillée du circuit radiofréquence (1) de la figure précédente ;
- La figure 20 illustre un mode de réalisation d'un étage de réception (16B) de la figure 19 ;
- La figure 21 illustre un mode de réalisation d'un étage d'émission 17 de la figure 19 et le cas échéant, une intégration du circuit N d'amélioration de la communication dans cet étage d'émission (selon pointillés)
- Les figures 22 et 23 illustrent une antenne de réception agencée par rapport à une carte micro SD et des valeurs de circuit équivalents de l'antenne ;
- La figure 24 illustre un niveau de modulation par le composant radiofréquence SE (5) ;
- La figure 25 illustre un filtre d'extraction du signal de réponse du composant 5 à partir de la porteuse de la figure précédente ;
- La figure 26 illustre schématiquement un circuit de combinaison de la porteuse et du signal de réponse seul ;
- La figure 27 illustre un circuit LC relatif à l'antenne d'émission du circuit radiofréquence à communication activée ;
- La figure 28 illustre des valeurs des réactances $X_L$ et $X_C$ à partir respectivement de l'inductance et de la capacité en fonction de la fréquence ;
- La figure 29 illustre un agencement d'une antenne d'émission 8 pour carte micro SD équipée d'un circuit radiofréquence à communication activée et un agencement des deux antennes entre elles.

Aux figures 3 et 4 est illustré un procédé de communication entre un transpondeur sans-contact et un lecteur basé sur une modulation de fréquence porteuse Fc. Pour communiquer une réponse du transpondeur, le procédé utilise au moins une bande latérale de la fréquence porteuse (Fc + Fs) résultant d'une modulation de l'amplitude de cette fréquence porteuse.

Selon une caractéristique de l'invention, la modulation applique au moins en partie un taux de modulation supérieur à 100%, ce qui provoque une modulation négative.

Sur la figure 4, on illustre le principe de modulation négative utilisé judicieusement par l'invention dans l'application à des objets transpondeurs radiofréquences communiquant par couplage électromagnétique avec un lecteur. Il s'agit, ici dans l'exemple, d'une sur-modulation dans laquelle la modulation est supérieure à 100 %.

Sur cette figure sont représentées des courbes supérieure et inférieure délimitant une enveloppe Fs de modulation d'une fréquence porteuse Fc disposée à l'intérieur de l'enveloppe. Les courbes inférieure et supérieure se croisent dans une partie correspondant à une seconde demi-alternance et en conséquence, les bandes latérales sont amplifiées comme illustré sur la figure à une valeur â/2 supérieure à la valeur Âo/2 généralement obtenue dans l'art antérieur.

L'objet transpondeur génère une réponse à l'aide d'un signal de modulation qui est cadencé à une fréquence de sous-porteuse ; La sous-porteuse véhicule la réponse du transpondeur. Le signal de modulation appliqué à la fréquence porteuse génère ainsi au moins une desdites bandes latérales qui sera détectée par le lecteur ; ces bandes latérales sont des fonctions de la fréquence de cette sous-porteuse.

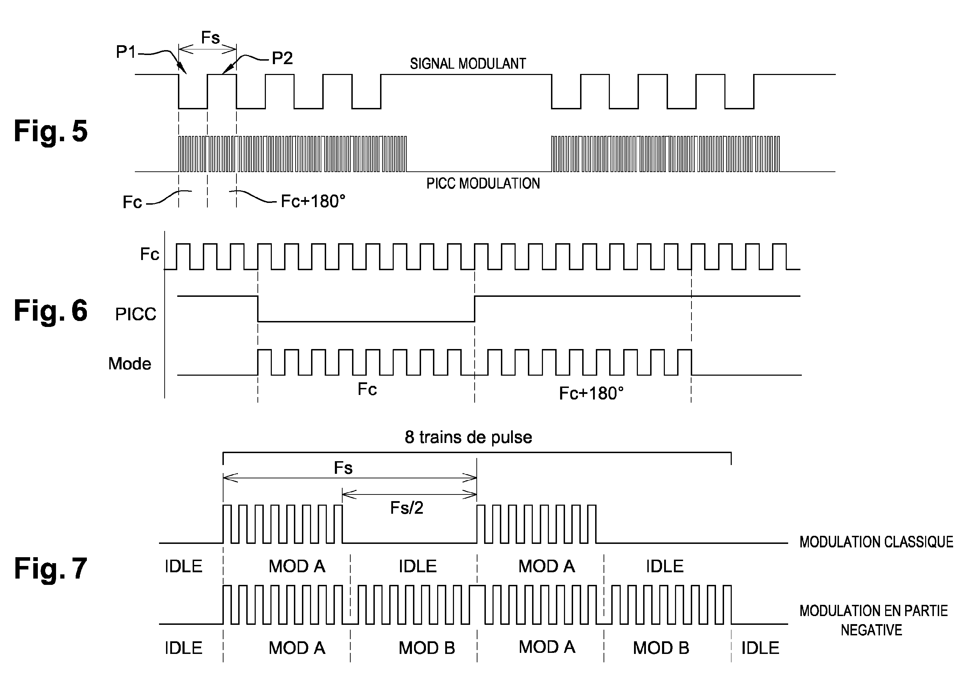

Plus particulièrement, sur les figure 5 et 6, on a illustré le principe de modulation négative (ou supérieure à 100%) appliquée aux communications sans-contact en champ proche de Type A et/ou Type B, tel que décrit dans les normes ISO/IEC 14443, ISO/IEC 18092 ou encore ISO/IEC 21481 connu également sous le sigle NFC (acronyme anglais de « Near field communication »).

Selon un mode de mise en oeuvre, le procédé de l'invention comprend les étapes suivantes pour réaliser la modulation d'amplitude à l'aide d'un signal de modulation. Le signal de modulation comprend au moins une alternance ou plusieurs.

Dans l'application aux normes ci-dessus, le signal modulant comprend quatre alternances (ou périodes de signaux alternés) de forme binaire définissant des niveaux haut ou bas, suivis d'une absence d'alternance pendant une durée correspondant également à quatre alternances.

Selon l'invention, la modulation s'effectue comme ci-après. Au cours d'une première partie P1 de première demi-alternance Fs/2 de signal de modulation, ce signal de modulation appliqué à la fréquence porteuse provoque sur cette dernière une modulation d'amplitude d'un taux proche de zéro (le signal de la porteuse n'est pas affecté) ;

Au cours d'une seconde partie (P2) d'une seconde demi-alternance Fs/2 opposée à ladite première demi-alternance (P1), la modulation est telle qu'il se produit une modulation négative ou équivalente d'amplitude avec un taux supérieur à 100 % et inférieur ou égal à 200 %.

Alternativement, la partie (P2) de la modulation négative peut correspondre seulement à une sous-partie cette demi-période (Fs/2), représentant par exemple la moitié ou le tiers de cette demi-période. Les parties P1 ou P2 peuvent donc s'étendre sur tout ou partie des demi-alternances Fs/2.

Selon d'autres caractéristiques, toutes les valeurs de modulation négative comprises entre 100 et 200 % grâce à des valeurs de déphasage comprises entre 0 et 180 ° peuvent être intéressantes à utiliser selon l'objectif de performance de la communication, par exemple égale à 90 %, 120 %, 150 %, 180 % ou 200 %;

Dans d'autres exemples, la modulation négative peut générer un déphasage de la fréquence porteuse qui est supérieur à 0 ° et sensiblement inférieur ou égal par exemple à 90 °, 135 ° ou 180 ° ce qui correspond à déphasage de 1/4, ou 3/4 ou en opposition de phase (1/2) par rapport à la phase de la fréquence porteuse.

L'invention prévoit une sélection préférée d'un taux de modulation négative sensiblement égal à 200 % avec un déphasage sensiblement égal à 180 ° conduisant à des performances optimales d'amplitude des bandes latérales.

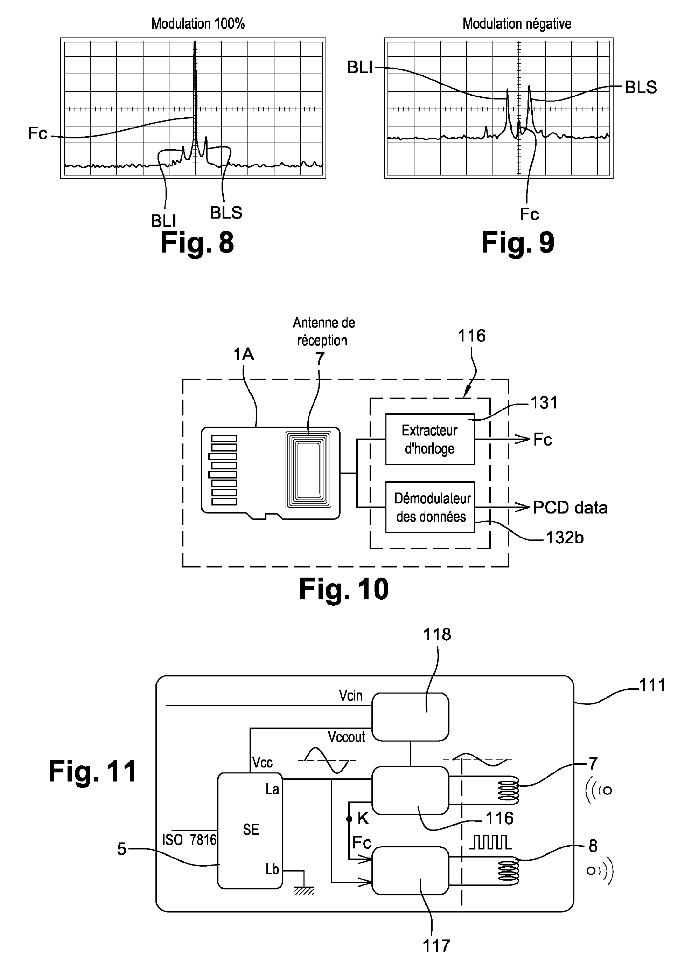

Dans cette configuration, l'amplitude détectée de la fréquence porteuse Fc émise par le transpondeur est même au minimum jusqu'à disparaitre complètement ou quasi totalement (fig.9).

Dans l'exemple illustré figures 6 et 7, la modulation au moins en partie négative s'effectue de la manière suivante. En absence de variation du signal modulant, l'objet transpondeur PICC ne produit aucune porteuse locale (son état est IDLE) comme détaillé par la suite. Puis, en présence d'un signal modulant représentant un état logique bas, l'objet PICC applique un signal en phase et de fréquence sensiblement identique à la fréquence du champ RF (partie MOD A)

Par contre, en présence d'un signal modulant représentant un état logique haut, l'objet PICC applique un signal déphasé de 180° ($\pi$) et de fréquence sensiblement identique à la fréquence du champ RF (partie MOD B).

Dans l'art antérieur illustré en partie supérieure à la figure 7, la modulation classique produit pour cette même période une absence de porteuse pendant la seconde demi-période (Fs/2) d'une alternance (Fs) de sous-porteuse de l'objet portable.

Les oscillogrammes et mesures spectrales des bandes latérales sans modulation négative et avec modulation négative selon le mode préféré de l'invention sont présentés respectivement aux figures 8 et 9. Sur la figure 9, on constate que la représentation spectrale de la modulation proposée par l'invention présente des bandes latérales qui sont supérieures à l'amplitude maximale de la fréquence porteuse.

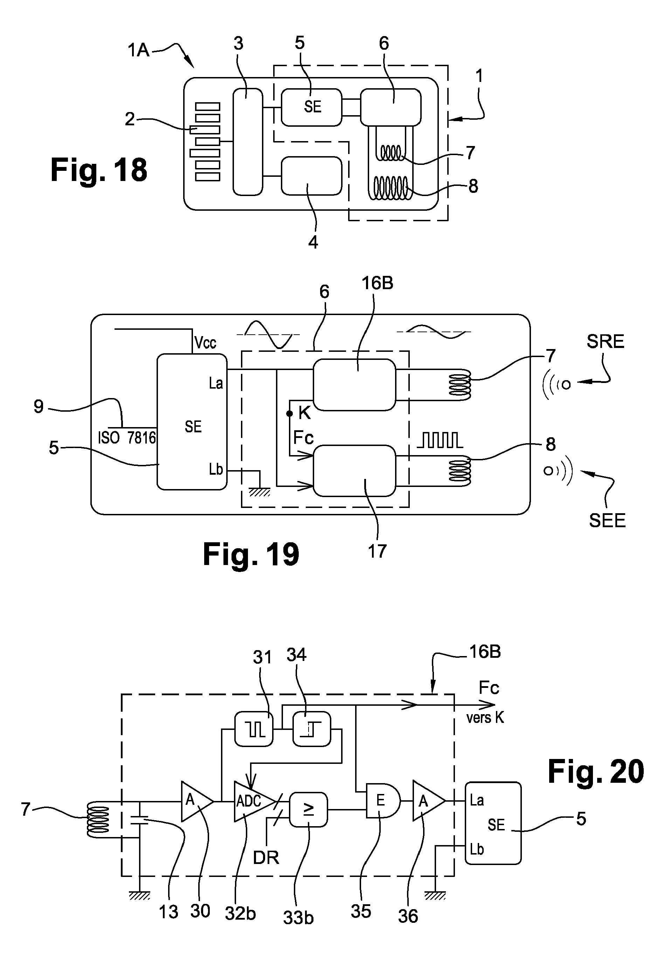

On va maintenant décrire en relation avec les figures 18 à 29 un exemple de réalisation du circuit ou objet radiofréquence à modulation activée pouvant utiliser le principe de modulation négative ; Ce principe peut être réalisé par exemple de la façon ci-après dans un objet portable tel que par exemple ici, une carte au format d'une carte à mémoire SD (fig. 18). Les mêmes numéros parmi les différentes figures représentent des éléments identiques ou similaires.

Selon une caractéristique pour cet exemple de réalisation, le procédé de communication radiofréquence activée comprend une étape de génération ou d'extraction de la fréquence porteuse par l'objet portable. La fréquence porteuse extraite est synchrone avec la fréquence d'interrogation du lecteur.

Le signal issu d'un lecteur PCD (non représenté) est prélevé dans un champ SRE au moyen d'une antenne de réception 7 de l'objet PICC 1A (figure 10) ; La structure de cette carte SD en ce qui concerne la fonction de communication sans contact est décrite ultérieurement. Schématiquement, l'objet portable 1A comprend un extracteur d'horloge 131 pour extraire la fréquence porteuse et un démodulateur 132b pour extraire les signaux venant du lecteur. De l'antenne 7 est prélevée la fréquence porteuse Fc ainsi que les signaux de commandes (PCD data) envoyés par le lecteur.

Les éléments 131 et 132 peuvent être identiques ou similaire aux éléments 31 et 32b de la figure 20.

Tous ces signaux extraits peuvent être conditionnés, notamment amplifiés, afin de fournir à un composant sécurisé (SE) les niveaux et puissance nécessaire à son fonctionnement. Le composant sécurisé peut par exemple être une puce SE sans-contact classique à interface duale telle que celle des cartes à puce radiofréquence, comme représenté à la figure 19.

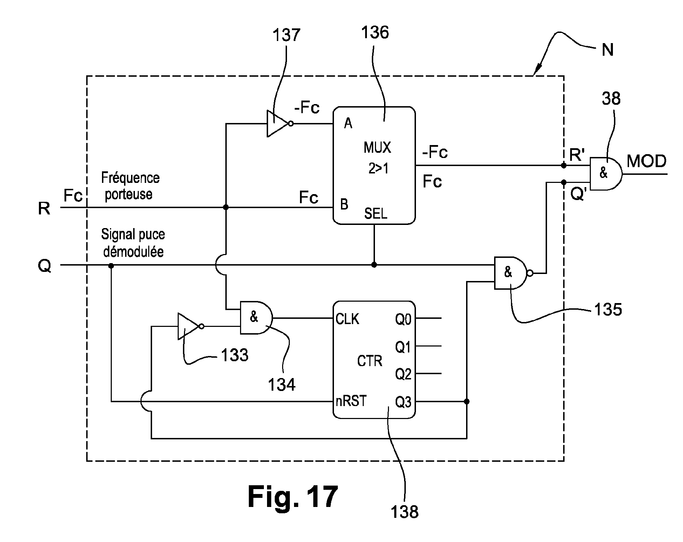

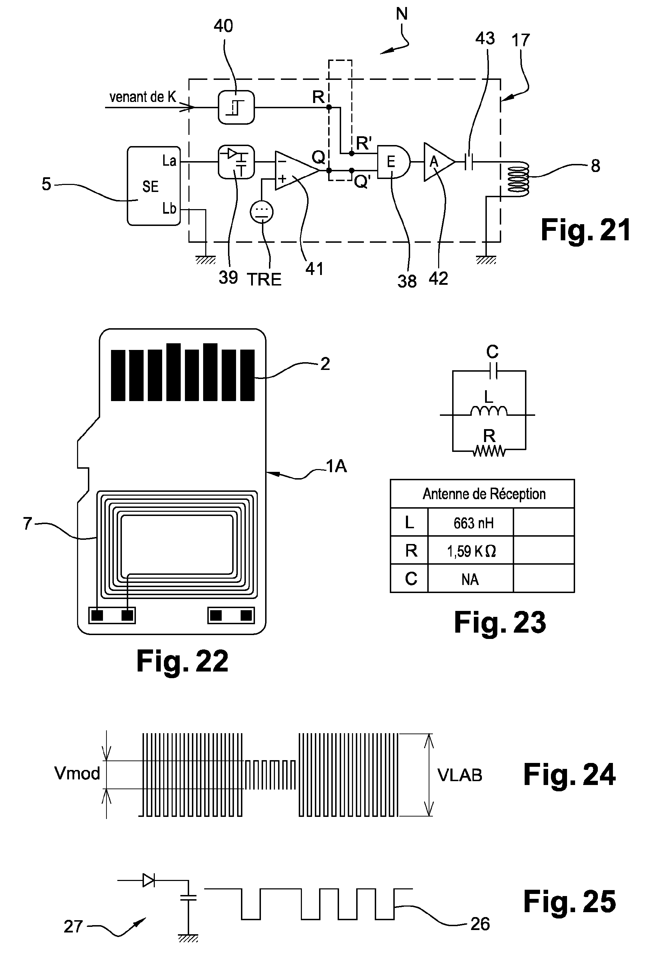

Le signal de fréquence Fc est traité dans un quelconque des étages électroniques de l'objet portable afin de fournir plusieurs états de phase différents, particulièrement *Fc* et *Fc* + $\Pi$ pour utilisation ultérieure par le modulateur 117. De *préférence, ces états sont obtenus dans l'étage spécifique N décrit à la figure 17 ultérieurement. L'étage ou circuit N peut venir s'insérer dans un objet radiofréquence à communication activée comme décrit à la figure 21.*

A la figure 11, le circuit électronique selon un mode de réalisation pour communication activée comprend des antennes de réception 7 et d'émission 8 relié respectivement à un étage de réception 116 et d'émission 117. L'étage de réception 116 est connecté à une puce de type à interface duale contact et sans-contact (5). L'étage d'émission ou de modulation 117 peut recevoir la porteuse Fc après extraction dans l'étage de réception 116 via une connexion spécifique via le point K ou un BUS le reliant à l'étage 116 ; Alternativement, l'étage 117 peut lui-même prélever et extraire la porteuse.

Le circuit 111 (ou la carte 1A ou circuit 1) peut comprendre un étage de détection 118 d'un champ radiofréquence relié à une alimentation « Vcin » qui va permettre l'alimentation « Vcc out » du composant SE en présence de champ électromagnétique. L'étage 117 est relié au plot « La » du composant SE de manière à recevoir la réponse du composant SE. Les étages 116 et 117 peuvent être conformes à l'étage 16B des figures 19 et 20 décrites ultérieurement eu égard le circuit à communication activée 111.

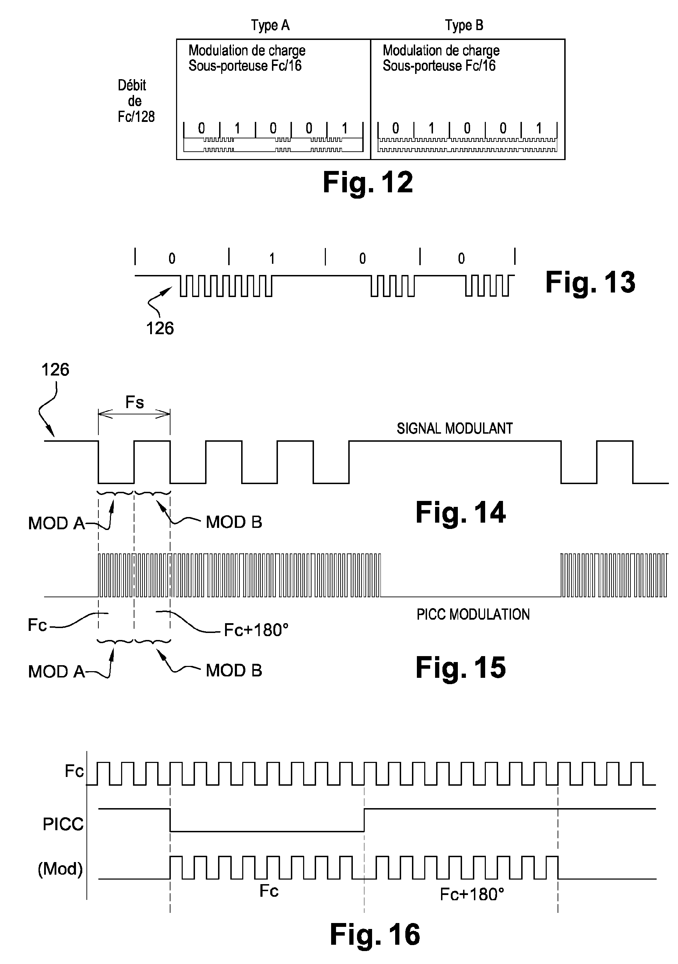

Les données issues du composant sécurisé SE sont prélevées sur ces bornes La et Lb habituellement prévues pour être connectée à une antenne radiofréquence. A ces bornes, le message de l'objet portable PICC ou du composant SE prend la forme d'une modulation de charge utilisant notamment deux types de codage de la sous-porteuse véhiculant les données ; Le type A utilise un codage Manchester OOK et le type B utilise un codage BPSK NRZ-L comme illustré à la figure 12.

Le message de l'objet portable PICC peut être démodulé et conditionné pour présenter le message basse fréquence du PICC incluant une sous-porteuse. En type A, on obtient le codage 126 tel qu'illustré à la figure 13 et agrandie à la figure 14.

Ce signal modulant 126 est utilisé par un modulateur de l'étage 117 pour faire varier l'amplitude et la phase de la fréquence porteuse locale *Fc* afin de réaliser la modulation négative conforme au procédé de l'invention et comme illustré à la figure 15.

Selon une caractéristique du procédé de l'invention selon ce mode de réalisation, la mise en oeuvre de la modulation négative s'effectue pendant tout ou au moins une partie (MOD B) d'un signal de modulation ; Dans l'exemple, cette partie (MOD B) correspond à des demi-périodes des alternances (IDLE) pendant lesquelles la fréquence porteuse était bloquée dans l'art antérieur par la modulation.

Dans un mode de réalisation de cette modulation, le signal modulant est reconditionné depuis la forme d'onde issue de la modulation de charge aux bornes La et Lb de la puce SE. L'invention prévoit de préférence de distinguer une absence de variation du signal modulant (IDLE), d'une présence d'un signal modulant à l'état haut (MOD B) ; Ces deux états étant codés par un même niveau logique haut.

Dans ce mode préféré de réalisation, le procédé prévoit de réaliser les opérations spécifiques ci-après :

- En présence d'un signal à l'état logique bas, le dispositif électronique applique un signal en phase et de fréquence sensiblement identique à la fréquence du champ RF ;
- Lors du passage d'un état logique bas à un état logique haut, le procédé applique un signal déphasé de 180° ($\pi$) et de fréquence sensiblement identique à la fréquence du champ RF, durant un délai de 8 périodes de porteuse ;
- Au terme des 8 périodes de porteuse, le procédé prévoit d'appliquer un signal à l'état bas jusqu'au prochain état bas du signal modulant.

La figure 17 propose un mode de réalisation du circuit électronique N de modulation négative mettant en oeuvre les opérations ou étapes ci-dessus. Il comprend principalement un compteur binaire CTR (138) et un multiplexeur MUX (136). Le multiplexeur reçoit sur les entrées A et B respectivement la fréquence porteuse Fc d'une part et son inverse (-Fc) pour le déphasage de 180 ° via un inverseur 137.

L'entrée « SEL » du multiplexeur reçoit le signal de la puce SE après avoir été démodulé.

Le compteur binaire CTR (138) reçoit au niveau de son signal d'horloge CLK la sortie d'une porte logique 134 ou fonction « ET » ; cette porte « ET » 134 reçoit le signal de la fréquence porteuse et un résultat de comptage issu du compteur en « Q3 » et inversé par un inverseur 133.

Une porte logique NAND (135) reçoit en entrée le signal démodulé de la puce ainsi que le signal du compteur en « Q3 ».

La sortie du circuit « N » résulte d'une porte logique « ET » 38 recevant d'une part la sortie du multiplexeur (136) et celle de la porte NAND (135) visée précédemment. Le compteur compte les périodes de la porteuse comme expliqué ci-dessus.

Le circuit fonctionne de la manière expliquée ci-après. En présence d'un signal IDLE ou haut de la puce et d'un état de comptage égal à huit, la porte NAND (135) reçoit un état haut logique sur ses deux entrées et délivre un état égal à zéro. De ce fait aucun signal ne sort du circuit après la porte « ET ».

Lorsque la puce émet un signal bas (zéro), le multiplexeur activé par ce signal sélectionne le signal de fréquence porteuse Fc alimentant une entrée de la porte « ET » 38 en bout de circuit ; Son autre entrée est alimentée par un état haut de la porte NAND (135) (puisque cette porte NAND reçoit un signal bas de la puce et une signal haut du compteur bloqué à 1 en sortie Q3).

Il en résulte en sortie du circuit un signal identique à la fréquence porteuse Fc.

Lorsque le signal de la puce bascule au niveau haut (valeur 1), il provoque une remise à zéro du compteur qui compte les périodes de la fréquence porteuse Fc jusqu'à 8.

Entretemps, le signal en Q3 est remis à zéro et le signal à l'entrée de la porte NAND est au niveau haut (1) ; Il en résulte un signal haut en entrée de la porte « ET » (38) en bout du circuit.

Parallèlement, le signal haut de la puce déclenche une sélection d'un passage de la fréquence porteuse déphasée Fc + 180° dans le multiplexeur MUX et également un passage à travers la porte « ET » (38) du fait de la valeur à « 1 » sur l'autre entrée comme indiqué précédemment. De ce fait, le circuit délivre le signal (MOD) de la porteuse déphasée de 180 ° en sortie.

Lorsque le compteur a compté 8 périodes de fréquence porteuse, le signal en Q3 passe à l'état « haut » provoquant une sortie de la porte NAND (135) égale à l'état « bas ».

Dans cet état, le circuit cesse de délivrer la fréquence porteuse déphasée bien que le signal de la puce reste à l'état « haut ».

Dans le cas où la puce serait passée à un état « bas » à la fin des 8 périodes, la sortie de la porte « NAND » passerait à un état « haut » (puisque alimentée par un état « haut » du compteur et un état « bas » de la puce) et dans ce cas, le circuit laisserait alors passer la fréquence porteuse Fc normalement et ce jusqu'à présenter un nouvel état haut qui fait fonctionner le circuit comme indiqué précédemment.

Un étage d'amplification (42) (fig. 21) permet ensuite au moyen d'une antenne d'émission (43, 8) de transmettre ce message au lecteur sans contact (PCD). Les caractéristiques de cet étage ainsi que celles de l'antenne d'émission peuvent être conformes à celles décrites ci-après.

L'invention s'applique à un procédé et un dispositif de communication mettant en oeuvre un mode de communication activée. On décrit ci-après un objet portable « PICC » réalisant une telle communication activée. Le dispositif N décrit ci-dessus peut s'interposer dans un étage électronique 17 d'objet portable à communication activée comme illustré à la figure 21.

Par communication activée, on entend une communication sans contact dans laquelle la réponse d'un transpondeur s'effectue par émission d'un champ électromagnétique propre au transpondeur, de préférence amplifié. Cette émission est en fait obtenue par l'émission à une puissance déterminée d'un signal porteur modulé par un signal du transpondeur.

L'énergie de l'amplification et/ou de fonctionnement du transpondeur émetteur / récepteur est de préférence fournie par une source d'énergie externe distincte du lecteur.

Typiquement, la communication ou le circuit sans-contact de l'objet portable PICC sont conformes à la norme ISO/IEC 14443 et/ou ISO/IEC 15693 ou tout autre protocole s'appuyant sur une fréquence d'excitation du champ électromagnétique à 13.56 MHz. Le circuit est alimenté par une source de courant.

A la figure 18 est schématisé un exemple de réalisation d'un circuit de communication sans-contact 1 à communication activée équipant une carte à mémoire 1A. Toutefois, tout autre objet communiquant peut à priori en être équipé, par exemple, clé USB, carte PCMCIA... téléphone, PDA, ordinateur.

L'objet peut ou non être amovible par rapport à un dispositif hôte ou y être fixé à demeure notamment soudé sur une carte à circuit imprimé. Le circuit ou l'objet peut le cas échéant prévoir des connexions d'antenne externes plutôt que de les supporter.

La carte à mémoire 1 comprend de manière connue des plots de contact 2, un microcontrôleur 3, une mémoire de masse 4 (NAND) reliée au microcontrôleur. La carte comprend en outre un élément de traitement de communication 5 ; Il est de préférence de type à interface duale (configuré pour gérer une communication de type contact, par exemple ISO 7816-3 et sans contact ISO-14443 (SE)); Ce composant ou élément 5 (SE) est de préférence sécurisé comme une puce de circuit intégré connue du domaine de la carte à puce ; Il peut être doté, le cas échéant de fonctionnalités cryptographique et/ou anti-fraude, anti-intrusion, etc.

Le composant SE est relié au microcontrôleur 3 par un port d'entrée/sortie ; Le composant de sécurité SE est connecté à un circuit 6 d'interface CL actif ; Ce composant 6 reçoit deux antennes 7, 8, respectivement de réception et d'émission.

Dans son principe, on observe que l'invention comprend des moyens RF supplémentaires 6, 7, 8 ajoutés à l'élément sans contact SE afin de compenser la taille particulièrement réduite de l'antenne puisque logée dans une carte micro SD ou mini SD ou dans un objet d'encombrement sensiblement équivalent.

Selon une caractéristique d'un mode de réalisation de l'invention, les moyens d'émission 5, 6, 7, 8 sont configurés pour moduler un signal porteur 25. Ce signal porteur est ici de préférence dérivé ou extrait du champ magnétique reçu d'un lecteur externe.

Dans l'exemple, le circuit radiofréquence 6 réalise des activités fonctionnelles de réception et d'émission du champ électromagnétique ci-après ; Il capte notamment le champ radiofréquence RF externe provenant d'un lecteur sans contact pour, si nécessaire, le rendre compatible au composant sécurisé SE (tension, etc.) ; Il amplifie la réponse de l'élément sécurisé SE destinée à être écoutée par le lecteur externe.

La figure 19 décrit plus en détail le composant SE (5) et ses liaisons. Le circuit SE de ce mode comprend des moyens de connexion à une source d'énergie externe.

Dans l'exemple, le composant SE comprend une interface à contact, par exemple conforme au standard ISO-7816 symbolisé par un faisceau de connexions 9 ; il comprend un plot d'alimentation Vcc, et des plots La, Lb reliés respectivement à une interface active 6 et à la masse. Le composant SE est configuré pour moduler une charge d'impédance en réponse à une réception des trames sans contact reçues sur ses plots La, Lb.

L'interface active 6 comprend un circuit 16B de conditionnement du signal de réception SRE et un circuit 17 générateur de pulses pour émettre un signal d'émission SEE. Chaque circuit 16B, 17 est relié au plot (La) du composant de traitement 5.

Conformément à un mode de réalisation de l'invention, les moyens d'émission 5, 17 sont configurés pour moduler un signal porteur. Le signal porteur résulte de préférence d'une dérivation ou extraction du champ magnétique reçu SRE.

Horloge et réception des données.

Selon un mode de mise en oeuvre, le procédé comprend une étape de réception de la fréquence porteuse générée par le lecteur ; La fréquence porteuse est reçue par une antenne de réception dédiée 7. L'antenne 7 reçoit en fait le champ électromagnétique émis par le lecteur comprenant la fréquence porteuse modulée. La fréquence est dans l'exemple de 13,56 MHz mais elle pourrait être tout autre selon le type de communication ou protocole s'appuyant sur cette fréquence de 13.56 MHz de courte ou moyenne portée inférieure notamment à 10 m, 1 m ou 0,1 m voire même proche de 0.

Toutefois, l'invention n'exclut pas de générer un signal porteur autrement par exemple à partir d'un signal d'horloge ou signal interne d'un dispositif hôte ou de l'objet, un dispositif de synchronisation sera necessaire pour asservir l'horloge interne à celle du champ magnétique externe par exemple au moyen d'une PLL. Dans ce mode de réalisation, une seule bobine pourra être utilisé comme antenne à la fois réceptrice et émettrice. Un circuit de commutation (switch) pourra transformer cette étage en étage de réception constitué:

- d'un circuit à résonance parallèle pour la réception
- d'un circuit à résonance série pour l'émission.

Les deux circuits résonants étant formés de la même bobine.

Cette étape de réception a également pour objectif de collecter les données envoyées par le lecteur à l'objet sans contact. Un étage électronique comprenant un circuit de réception dédié peut être élaboré dans ce but notamment pour adapter la tension.

Le procédé peut également mettre en oeuvre une étape d'adaptation à travers un étage d'adaptation de réception (16B) pour adapter le signal de réception SRE à la puce 5 ; Le procédé peut cumulativement ou alternativement effectuer dans cet étage une extraction d'un signal de porteuse synchronisée 25 du signal de réception SRE.

A la figure 20 est illustré un mode de réalisation détaillé de l'étage 16B. L'étage de réception 16B comprend l'antenne de réception 7 ici relié au plot 'La' de la puce via un circuit de réception décrit ci-après.

Le signal reçu par cet antenne peut être amplifié avant extraction du signal d'horloge correspondant au signal de la porteuse ; A cet effet, le circuit comprend un amplificateur 30 relié à l'antenne et à la sortie de cet amplificateur est relié un extracteur d'horloge 31 ;

Le signal d'horloge obtenu 25 en sortie de l'extracteur est envoyé par une liaison (K) sur un circuit générateur de pulse ou étage d'adaptation d'émission 17 détaillé à la figure 21. La sortie de l'extracteur d'horloge 31 est par ailleurs également reliée à un circuit logique 35 réalisant une fonction « ET ».

L'étage 16B comprend ici également un convertisseur analogique/ numérique 32b recevant le signal de réception SRE amplifié par l'amplificateur 30 relié à un circuit de comparaison 33b pour comparer le signal obtenu démodulé à une valeur de tension digitale de référence (DR).

Ensuite, le signal de sortie du comparateur digital 33b est combiné avec le signal d'horloge 25 venant de l'extracteur d'horloge 31 au niveau d'un composant 35 réalisant une fonction 'ET' logique ; Une première branche de la sortie du composant 35 peut passer par un amplificateur 36 avant d'être injecté dans le plot 'La' de la puce 5.

En alternative une seconde branche de la sortie du composant 35 peut passer par un inverseur puis un amplificateur 36 avant d'être branché sur le plot 'Lb' de la puce.

Le plot « Lb» est ici branché à la masse.

Dans une variante, le circuit d'extraction d'horloge 31 peut se connecter également à un déphaseur 34 avant d'agir sur le convertisseur analogique/ numérique 32b.

L'étage ou circuit de réception 16B est d'une part branché à l'antenne de réception 7 reliée ici au plot 'La' de la puce. Le circuit 16B peut comprendre un condensateur 13 disposé aux bornes des plots 'La' et 'Lb' de la puce. Cette capacité permet d'avoir un bon facteur de qualité. Le circuit résonant de l'antenne de réception 7 est réalisé sur le principe d'un circuit parallèle.

En outre, ce circuit comprend un déphaseur 34 sur une branche de sortie de l'extracteur d'horloge 31. Ce déphaseur se branche ensuite sur le convertisseur analogique/numérique 32b.

Ainsi, cet étage 16B permet d'extraire le signal d'horloge 25 et d'adapter le signal à la puce 5. Après réception et amplification, le signal porteur est dirigé sur l'entrée RF de la puce Combi 5 en utilisant les plots d'interface La / Lb. Un condensateur supplémentaire 18 peut être ajouté à l'interface afin d'adapter l'impédance d'entrée.

L'étage électronique 16B fonctionne de la manière ci-après :

Le signal SRE reçu par l'antenne 7 peut être assez faible compte tenu de la petite surface de couplage de l'antenne 7 dans un support tel qu'une mini carte SD.

Ce signal est amplifié par l'amplificateur 30 avant d'être démodulé par le convertisseur analogique/numérique 32b ; Un signal utile extrait et calibré par le comparateur 33b est combiné par la porte (ET) 35 avec le signal d'horloge 25 extrait par l'extracteur d'horloge 31. En sortie de la porte 35, le signal radiofréquence reconditionné est injecté dans le composant 5 en étant au préalable amplifié grâce à l'amplificateur 36.

Parallèlement, l'alimentation Vcc de la puce côté contact ISO 7816 peut être désactivée par un circuit adéquat (non représenté) pendant la présence d'un champ électromagnétique SRE. Ce dernier circuit peut être compris dans le circuit 16B. L'actionnement peut être manuel.

Ces derniers peuvent avoir de préférence leurs composants (30, 36, 32b...) alimentés en tension par une alimentation provenant des contacts 2 en relation avec un dispositif hôte.

Le déphaseur 34 permet de régler de manière précise les déclenchements d'acquisition du signal radiofréquence afin de convertir l'enveloppe du signal reçu en signal numérique par le convertisseur 32b.

La puce « Combi » 5 peut être alimentée par ses plots de contacts ISO/IEC 7816 Vdd et Vss et peut ou non utiliser de l'énergie qui lui est procurée par le champ selon l'utilisation et le montage électronique de l'invention. La puce peut aussi être alimentée par une tension qui serait générée à l'image du champ RF ou par le circuit 16B lui-même qui serait alimenté par les contacts 2 d'un dispositif hôte.

L'avantage de cette dernière option est pour le composant 5 de voir son alimentation gérée par l'étage 16B en fonction de la présence ou non du champ et le cas échéant de réinitialiser la puce 5.

À ce stade, l'amplitude de tension VLab est au moins de 3.3 Vpp (Volts crête-crête). Cette valeur est nécessaire pour que la puce de l'exemple détecte l'horloge de 13,56 MHz et puisse extraire des données provenant du lecteur.

A titre d'exemple, le tableau suivant indique la tension requise par deux puces actuelles exemple P5CD072 de Philips / NXP ou 66CLX800 de la société Infineon pour détecter l'horloge et les données provenant de champ extérieur.

| Puce | Puce sans contact Vcc = 3v | Puce sans contact Vcc = 2,7v |
|---|---|---|
| Vmin (Vpp) | 3,48 | 3,53 |
| Vmax (Vpp) | 6,87 | 6,22 |
| Duty Cycle (%) | 7,7 | 7,7 |

Antenne de réception (fig. 22, 23).

La dimension de l'antenne de réception 7 est aussi large que possible dans la limite de la surface disponible dans l'objet. Dans le cadre d'une surface disponible sur une carte micro SD, les résultats ci-dessous ont été retenus. L'inductance est de préférence sélectionnée de façon à être accordée par un condensateur supplémentaire de faible valeur afin de limiter la taille du condensateur.

L'antenne de réception peut par exemple avoir une surface 5 x 5 mm² et comprendre 4 à 6 spires. L'antenne peut être réglée à 13,56 MHz avec un facteur de qualité Q de 10. Un circuit parallèle peut être sélectionné de manière à obtenir une tension maximale aux bornes du circuit d'antenne. Les caractéristiques suivantes d'antenne ont été sélectionnées avec le circuit équivalent de la figure 25 avec L : 663 nH et R : 1,59 K$\Omega$ ; C n'étant pas applicable.

Les performances de l'antenne mesurées avec une telle antenne avec le schéma équivalent de la figure 25 sont données dans la table ci-dessous.

Ls = 663 nH ; Rs = 1,59 K$\Omega$ ; C1 = 180 pF ;
C2 = 18 pF ; Rc = 270 K$\Omega$ ; Cp = 9,5 pF ; Rp = 1 M$\Omega$.

| Intensité du champ | Puce sans contact Vcc = 2,7v |
|---|---|
| 1, 5 A/m | 1, 01 Vpp |
| 4,5 A/m | 3, 00 Vpp |
| 7,5 A/m | 5, 09 Vpp |

La tension attendue avec cette antenne est supérieure à 1Vpp (Volt crête à crête). Le champ minimum crée une tension supérieure à 1Vpp, pas assez pour la puce combi 5 de détecter le signal. C'est pourquoi, dans l'exemple de réalisation avec une carte micro SD, on a de préférence introduit un étage d'amplification. Cet étage d'amplification pour la réception de l'horloge est ici supérieur à 10 dB, le gain en tension étant égal à 3. Cette amplification peut ne pas être nécessaire dans d'autres circonstances ou d'autres puces.

Le niveau de sortie de l'étage de conditionnement 16B est compris entre 3 Vpp et 14 Vpp. Le gain peut être compris entre 5 et 20dB.

La coupure d'alimentation de la puce ou la fonction RESET peuvent être déclenchée aussi par tout moyen, tel un interrupteur dans le dispositif hôte ou sur le circuit d'alimentation de la puce. La puce se réinitialise automatiquement lors de sa mise sous tension.

Bande latérale et modulation (fig. 24-26).

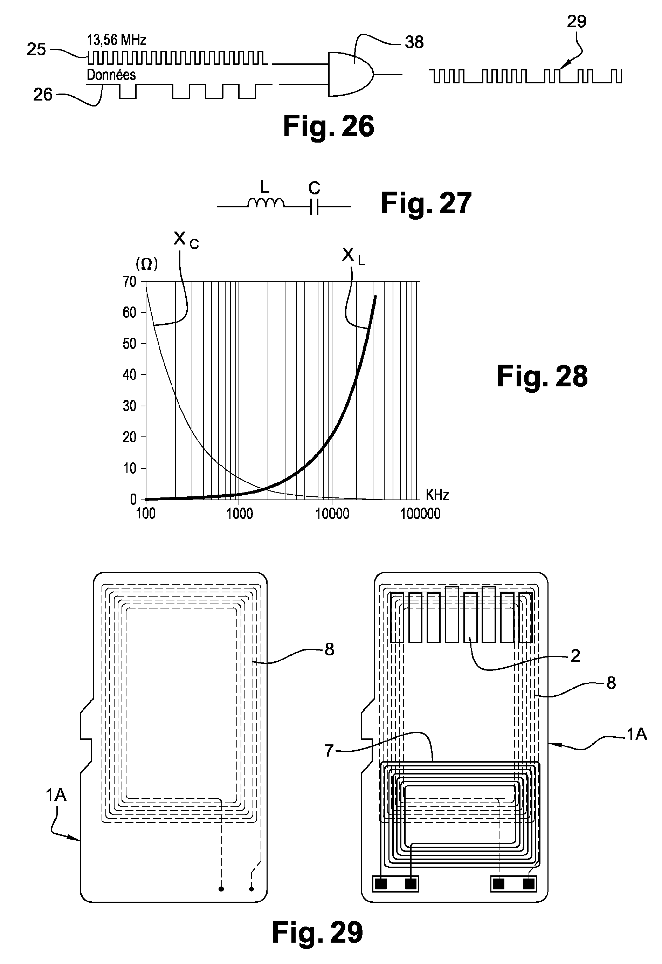

Dans l'exemple (fig. 26), lorsque la puce combi 5 reçoit le signal porteur 25 (ou la porteuse) ainsi que le signal de données 26, par le biais de ses plots La /Lb, elle génère un signal de modulation de charge afin de transmettre une réponse au dispositif ou terminal en relation de communication avec elle. L'amplitude du signal de modulation Vmod est ici environ la moitié de l'amplitude de la porteuse VLAB lorsque le condensateur est bien adapté.

Un condensateur de 10 à 60 pF aux bornes des points La, Lb de la puce peut être utilisé à cet effet. Cette valeur peut varier selon le type de puce. Ainsi on obtient les tensions VLAB et Vmod égales respectivement à 3,3 Volts crête-crête et à 1,6 Volts crête-crête.

À cette étape, deux options sont envisagées. La première plus simple est d'utiliser ce signal tel qu'il se présente puis, de préférence, de l'amplifier dans un étage d'amplification forte puissance avant d'injecter le signal dans un circuit d'adaptation ou d'activation de l'émission 17 avant l'antenne émettrice 8. Différents moyens d'amplification connus de l'homme de l'art peuvent être utilisés.

Dans un autre exemple (fig. 26) conforme à une seconde option, le signal porteur pour l'émission est supprimé afin de conserver que les données numériques 26. A cet effet, on peut utiliser par exemple un filtre passe-bas 27 de la figure 25.

Par la suite (fig. 26), on effectue une modulation de préférence à 100 % par en combinant le signal de données 25 avec une porteuse 26 à 13,56 MHz. Ceci peut être réalisé à l'aide la porte (ET) logique 38 ou d'un tampon amplificateur 42 ou d'un montage à transistor réalisant la même fonction. Après une amplification de puissance, le signal obtenu 29 est utilisé pour alimenter l'antenne de sortie 8.

Ainsi, plutôt que d'amplifier l'ensemble comprenant la porteuse 25 et le signal 26 ou la porteuse seule 25 même quand il n'y a pas de signal, l'invention prévoit d'amplifier le signal et la porteuse uniquement lorsqu'il y a du signal de réponse. Par exemple, ici sur la figure 26 le signal 29 utile est amplifié quand le signal de donnée est à un niveau haut. Lorsqu'il n'y a pas de signal, (ligne de donnée à un niveau zéro ou proche de zéro), aucun signal ne sort de la porte 38. Il n'y a pas d'amplification et perte d'énergie inutile de la porteuse seule avant d'alimenter l'antenne d'émission.

La figure 21 illustre une option préférée de réalisation relativement simple permettant d'obtenir de bons résultats et mettant en oeuvre pour partie la seconde option; Selon cette option préférée, l'étage d'adaptation 17 comprend une porte logique « ET » 38 ou circuit équivalent pour combiner un signal de porteuse 26 (fig. 26) et un signal de réponse 25 ou d'émission de la puce 5 avant amplification.

Plus en détail dans le circuit 17, le plot 'La' de la puce 5 est connecté à un démodulateur 39 (qui peut être du même type que le circuit 27 ou 32b) pour recevoir un signal de réponse modulé de la puce 5 ; Ensuite, la sortie du démodulateur 39 relie un comparateur 41 qui compare le niveau de tension reçue à un niveau de tension de référence (TRE) ceci afin de numériser le signal utile. La sortie du comparateur 41 portant le signal de réponse utile de la puce 26 se trouve branchée sur l'une des entrées du composant 38 réalisant la fonction 'ET' logique pour combiner le signal de porteuse 25 avec le signal de réponse 26 de la puce.

La porteuse 25 provient du point K de l'étage d'adaptation de réception et d'extraction 16B ; La porteuse est injectée via une liaison à l'autre plot d'entrée du composant 38 réalisant la fonction 'ET' logique ; Le signal d'horloge est de préférence déphasé par un déphaseur 40 de manière à synchroniser ou caler de manière optimale les signaux d'horloge avec la porteuse du signal radiofréquence générée par un dispositif lecteur afin de produire une rétro-modulation maximale.

Le circuit 17 comprend de préférence un circuit tampon ou amplificateur 42 pour amplifier le signal 29 en sortie du composant 38 avant de l'injecter dans l'antenne d'émission 8. Le circuit d'antenne utilisé forme avec un condensateur 43 un circuit résonant série.

Certains composants de l'étage 17 peuvent de préférence être alimentés en tension, pour leur fonctionnement, par une source d'énergie provenant du dispositif hôte via les contacts 2. D'autres sources connues de l'homme de l'art ne sont pas exclues.

Le circuit 17 fonctionne comme ci-après. Après que la puce ait reçu sur ses points La, Lb des trames radiofréquences SRE de préférence reconditionnées au préalable, la réponse de la puce par modulation de charge est reçue et démodulée dans le démodulateur 39 ; Puis un signal utile est numérisé par le comparateur de seuil 41 avant d'être injecté dans le circuit (ET) 38 et combiné à une porteuse 25 extraite ou dérivée du champ reçu SRE provenant du point K. Le cas échéant, le circuit 17 peut comprendre un extracteur d'horloge similaire à 31 prélevant le signal comme aux parties en pointillés 16B.

Le signal de réponse 29 résultant du circuit 38 est ensuite amplifié de préférence par l'amplificateur 42 avant d'être injecté dans l'antenne émettrice à résonance série 8.

Puissance de l'amplification tampon de sortie.

De manière à compenser la faible surface de l'antenne émettrice dans la carte SD (ou autre substrat), on peut utiliser un amplificateur tampon de sortie 42 qui délivre de préférence un courant minimum allant de 60 à 80 mA sous la tension d'alimentation apportée. De bons résultats sont obtenus avec une puissance supérieure à 200 mW.

Un avantage de ce traitement est notamment de limiter la consommation d'énergie au niveau de l'amplification lorsqu'il n'y a pas de signal réponse de la puce 5. Il est en effet inutile d'amplifier le signal de la porteuse seul quand il n'y a pas de réponse ou de signal à émettre dans l'application envisagée.

Antenne de sortie & accord de fréquence (fig. 28, 29).

Les antennes 7, 8 comprennent dans l'exemple des spires disposées à plat sur un même substrat (ou deux substrats distincts) comme illustré sur les figures notamment 22 et 29. Tout moyen connu de réalisation d'antenne par l'homme de l'art peut être utilisé comme la gravure, l'incrustation de fil par ultrason, etc.

Lorsque le système est alimenté par une basse tension (3,3 V), l'antenne de sortie est conçue de manière à réaliser une résonance série. Lorsque le système est alimenté par un courant fort, la tension entre le circuit LC total sera relativement faible, quand une tension élevée est présente sur chaque composant L et C.

La courbe illustrée à la figure 28 représente des valeurs obtenues de réactance XL en fonction de l'inductance et ainsi des valeurs de réactance XC en fonction d'un condensateur selon la fréquence en application des formules ci-dessous.

$$Xc = \frac{1}{2 \cdot \pi \cdot f \cdot C} \qquad\qquad X_L = 2 \cdot \pi \cdot f \cdot L$$

Au point d'intersection entre les deux courbes, les réactances XL et XC sont égales. F est la fréquence de résonance série du circuit.

À ce point, la tension aux bornes du circuit LC (fig. 27) est minime quand l'intensité du courant est maximale. Comme le flux magnétique est directement dépendant de l'intensité du courant, cette résonance série est un moyen de créer un champ magnétique élevé sur l'antenne émettrice 8 bien qu'elle soit alimentée par une faible tension.

Cela constitue un moyen d'augmenter la puissance du signal du transpondeur 5 malgré la petite dimension de l'antenne sur le substrat.

Caractéristiques de l'antenne d'émission (fig. 29).

Selon le mode de réalisation de l'invention, le circuit comprend des antennes distinctes de réception et d'émission ; Les antennes sont agencées entre elles de manière que leur inductance mutuelle soit minime ou s'annule au moins en partie. De préférence, on choisit l'agencement de manière à avoir une induction de courant dans l'antenne de réception mimine notamment inférieure à au seuil du gain de l'étage de réception 16B. Par exemple, avec un gain de 3 on prévoit d'agencer les antennes entre elles de manière à avoir une tension inférieure à 300 mV.

Dans une variante (non représentée), les antennes sont protégées l'une de l'autre en étant écartées l'une de l'autre et/ou par blindage.

Dans une autre variante, les antennes se chevauchent et on prévoit des moyens électroniques de protection tels des filtres configurés pour éviter des perturbations mutuelles.

Dans le mode avantageux de réalisation, la dimension de l'antenne émettrice 8 est plus grande que l'antenne de réception. L'antenne est par exemple située sur le côté arrière de la μSD come illustrée à la figure 29. Ses caractéristiques utilisées dans l'exemple sont : L = 1,05 μH ; R = 939 Ω ; C = 2,69 pF.

Afin d'éviter la diaphonie entre les antennes du fait d'un couplage entre elles inévitable, on procède à un agencement des antennes de telle manière que l'inductance mutuelle entre les deux antennes soit réduite au minimum. Différentes solutions sont possibles notamment isoler une antenne par rapport à l'autre, désactiver une antenne pendant que l'autre est active et vis versa.

Selon un mode préféré, cette caractéristique de mutuelle induction minimisée est obtenue par un chevauchement ou superposition des deux antennes. L'antenne de réception 7 plus grande dans l'exemple est agencée de manière à avoir sensiblement une partie disposée en dehors de la périphérie externe de l'antenne d'émission ; De préférence l'antenne de réception 7 est sensiblement montée à cheval à moitié sur un côté et à l'intérieur de la périphérie de l'antenne d'émission 8 et à moitié en dehors de la périphérie de l'antenne d'émission.

Ainsi, grâce à cette disposition particulière, on a deux antennes dont la résultante de l'inductance mutuelle est globalement nulle ou du moins minimisée.

Lorsque l'antenne d'émission émet un champ électromagnétique, une partie du flux F traverse dans un sens X une partie A de l'antenne 7 située en regard de l'intérieur de l'antenne d'émission 8 générant un courant induit (i) dans l'antenne 7 ; En même temps, une autre partie du flux F traverse une partie B de l'antenne 7 située en dehors de la surface de l'antenne d'émission 8 dans un sens Y contraire à X générant un courant induit (j) contraire à (i).

Ainsi par un chevauchement partiel des antennes, on diminue au moins la valeur d'une perturbation provoquée par l'antenne émettrice 8 sur l'antenne réceptrice 7.

La perturbation induite dans l'antenne réceptrice par l'antenne émettrice s'annule d'elle-même au moins en grande partie. La résultante peut être sensiblement globalement nulle selon le positionnement adéquate des antennes et leurs caractéristiques.

L'efficacité d'une auto-annulation peut dépendre de l'environnement immédiat extérieur à l'antenne comme par exemple, l'environnement métallique d'un téléphone ou dispositif hôte de l'objet 1. Les antennes peuvent être sur une même face d'un substrat en étant isolée l'une de l'autre ou sur des faces opposées. Les antennes peuvent être aussi agencées sur des supports distincts parallèles entre eux.

Le circuit à communication activée peut prévoir de mettre en oeuvre des éléments et les avantages décrits ci-après :

- Des moyens de récupération ou d'extraction de la porteuse du champ magnétique reçu pour permettre une fonction active de modulation sans oscillateur avec des puces classique sans contact (non NFC) ;
- u n agencement d'antennes séparées à mutuelle inductance nulle ou quasi nulle simplifiant le circuit ;
- La mise en oeuvre de deux sortes de résonance (de préférence de type parallèle pour la réception) et de préférence de type série pour l'émission pour une meilleure efficacité ;
- Un circuit d'adaptation de niveau 16B connecté à la puce 5 combi permettant l'usage des puces existantes, notamment les puces à interface duale (combi bancaire) qui sont déjà certifiées et sans aucune modification par simplification et par commodité industrielle ; En particulier, on prévoit l'usage de l'interface antenne La/Lb de la puce combi existante (notamment de la société Infineon SLE 66CLX800PE) pour moduler/démoduler ;
- En outre, l'invention s'affranchit du recours à une puce ou composant de type NFC avec notamment un oscillateur intégré. Par exemple, une puce sans contact répondant à la norme à la norme ISO/IEC 14443 et /ou ISO/IEC 15693 peut être utilisée.
- Le circuit peut comprendre un détecteur configuré pour fournir un signal représentatif de la présence d'un champ magnétique externe et déclencher un mode de fonctionnement parmi au moins un mode contact et mode sans-contact.
- En variante, l'une et/ou l'autre des antennes du circuit peut être déjà intégrée(s) dans un dispositif hôte, le circuit de l'invention sans les antennes venant simplement se brancher à l'une des antennes via un connecteur (non r eprésenté) pour plus d'adaptabilité du circuit à des dispositifs hôtes.

Le circuit de communication activée s'applique à tout dispositif ou appareil de communication comprenant le circuit décrit précédemment qu'il soit sous forme amovible ou pas.

**Revendications**

1. Procédé de communication radiofréquence entre un transpondeur sans-contact (1A) et un lecteur, dans lequel au moins une bande latérale (BLI) de la fréquence porteuse (Fc) est utilisée pour communiquer une réponse du transpondeur par modulation de l'amplitude (V) de cette fréquence porteuse,
**caractérisé en ce que** la modulation applique au moins en partie un taux de modulation supérieur à 100%, ce qui provoque une modulation négative (MOD B).

2. Procédé de communication radiofréquence selon la revendication précédente,
**caractérisé en ce qu'**il comprend :

   - une étape de génération ou d'extraction de la fréquence porteuse (Fc) par l'objet portable, ladite fréquence étant synchrone avec la fréquence d'interrogation du lecteur,
   - et **en ce que** la mise en oeuvre de ladite modulation négative (MOD B) s'effectue pendant au moins une partie d'alternance (p2) d'un signal de modulation (fs).

3. Procédé selon l'une quelconque des revendications précédentes, **caractérisé en ce que** ledit objet transpondeur (1, 1A, 111) génère un signal de modulation cadencé à une fréquence de sous-porteuse, ladite modulation générant au moins une desdites bandes latérales (BLI).

4. Procédé selon l'une quelconque des revendications précédentes, **caractérisé en ce que** ledit signal de modulation comprend au moins une alternance ou plusieurs, l'application de ce signal de modulation provoquant :

   - une modulation d'amplitude (MOD A) d'un taux proche de zéro, au cours d'une première partie (p1) de première demi-alternance de signal de modulation,
   - une modulation négative (MOD B) ou équivalente d'amplitude d'un taux supérieur à 100 % et inférieur ou égal à 200 %, au cours d'une seconde partie (p2) d'une seconde demi-alternance (fs/2) opposée à ladite première demi-alternance.

5.  Procédé selon l'une quelconque des revendications 3 ou 4, **caractérisé en ce que** la modulation négative (MOD B) génère également un déphasage de la fréquence porteuse supérieur à 0° et sensiblement inférieur ou égal à 180 °.

6.  Procédé selon l'une des revendications 4 ou 5, **caractérisé en ce que** le taux de ladite modulation négative (MOD B) est sensiblement égal à 200 % et le déphasage sensiblement égal à 180 °.

7.  Circuit de communication sans-contact pour établir une communication entre un transpondeur sans-contact (1, 1A, 111) et un lecteur, ledit circuit étant configuré pour générer au moins une bande latérale (BLI) de la fréquence porteuse (Fc) et l'utiliser pour communiquer une réponse du transpondeur par modulation de l'amplitude de cette fréquence porteuse,
    **caractérisé en ce qu'**il est configuré pour appliquer au moins en partie la modulation avec un taux de modulation supérieur à 100%, ce qui provoque une modulation négative (MOD B).

8.  Circuit selon l'une des revendications précédentes, **caractérisé en ce qu'**il comprend,

    - un étage de réception (116, 16B) du champ émis par le lecteur comprenant une antenne (7),
    - un étage d'extraction (31) de la fréquence porteuse Fc du champ reçu (SRE),
    - une unité de traitement (N) de ladite fréquence porteuse Fc, ladite unité étant configurée pour réaliser :
    - un ou plusieurs déphasages avec des moyens de déphasage (136, 137),
    - une modulation de l'amplitude de cette fréquence avec un modulateur (38),
    - un étage d'amplification des signaux modulés avec un amplificateur (42),
    - un étage d'émission (43, 8) de ces signaux avec une antenne (8).

9.  Circuit selon l'une quelconque des revendications 8 ou 9, **caractérisé en ce qu'**il comporte des moyens logiques (133, 134, 135, 138) de distinction du signal de modulation, lesdits moyens logiques étant configurés pour distinguer entre l'absence de message à émettre lors d'un état logique haut et un contenu de message à un même état logique haut.

10. Circuit selon la revendication précédente, **caractérisé en ce que** les moyens logiques de distinction sont réalisés par un compteur.

11. Circuit selon l'une quelconque des revendications 8 à 10, **caractérisé en ce qu'**il comprend des moyens de maintien de 8 périodes de porteuse avant de revenir à un même état logique bas, jusqu'au prochain état logique bas du signal modulant, à la fin du message à renvoyer.

12. Circuit selon l'une quelconque des revendications 8 à 11, **caractérisé en ce qu'**il comprend une première antenne (7) de réception de données et une seconde antenne (8) d'émission de données, lesdites première et seconde antennes étant distinctes l'une de l'autre.

13. Circuit selon l'une des revendications précédentes, **caractérisé en ce que** l'étage d'adaptation (17) réalise une fonction logique « ET » pour combiner un signal de porteuse (25) et un signal de réponse (26) avant amplification.

14. Circuit selon l'une quelconque des revendications précédentes, **caractérisé en ce que** l'antenne de réception (7) fait partie d'un circuit à résonnance parallèle et/ou l'antenne d'émission (8) fait partie d'un circuit de résonnance série.

15. Circuit selon l'une quelconque des revendications précédentes, **caractérisé en ce qu'**il comprend une puce sans-contact destinée à recevoir un signal de réception et un étage d'adaptation de réception (16B) pour adapter le signal de réception à la puce et/ou pour extraire un signal de porteuse synchronisée du signal de réception.

**Fig. 1**

**Fig. 2**

**Fig. 3**

**Fig. 4**

Fig. 5

**Fig. 5**

Fs
P1          P2
SIGNAL MODULANT
PICC MODULATION
Fc          Fc+180°

**Fig. 6**

Fc
PICC
Mode
Fc          Fc+180°

**Fig. 7**

8 trains de pulse
Fs
Fs/2
MODULATION CLASSIQUE
IDLE   MOD A   IDLE   MOD A   IDLE
MODULATION EN PARTIE NEGATIVE
IDLE   MOD A   MOD B   MOD A   MOD B   IDLE

EP 2 535 838 A1

Modulation 100%

Fc — BLI  BLS

**Fig. 8**

Modulation négative

BLI — BLS

Fc

**Fig. 9**

Antenne de réception
7

1A

116

Extracteur d'horloge — 131 → Fc

Démodulateur des données → PCD data

132b

**Fig. 10**

118

Vcin

Vccout

Vcc

La

SE

ISO 7816

Lb

K

Fc

**Fig. 11**

5

111

7

116

8

117

|  | Type A | Type B |
|---|---|---|
| Débit de Fc/128 | Modulation de charge Sous-porteuse Fc/16 | Modulation de charge Sous-porteuse Fc/16 |

**Fig. 12**

**Fig. 13**

126

126

Fs

SIGNAL MODULANT

MOD A — — MOD B

**Fig. 14**

Fc — — Fc+180°

PICC MODULATION

MOD A — — MOD B

**Fig. 15**

Fc

PICC

(Mod)

Fc          Fc+180°

**Fig. 16**

**Fig. 17**

Fig. 18

Fig. 19

Fig. 20

venant de K

R

Q

R'

Q'

SE

La

Lb

E

A

**Fig. 21**

40

39 TRE 41

38 42

43 17

5

N

8

**Fig. 22**

2

1A

7

C

L

R

| Antenne de Réception | | |
|---|---|---|
| L | 663 nH | |
| R | 1,59 K Ω | |
| C | NA | |

**Fig. 23**

Vmod

VLAB

**Fig. 24**

27

26

**Fig. 25**

25  13,56 MHz

38

29

Données

26

**Fig. 26**

L    C

**Fig. 27**

(Ω)    $X_C$    $X_L$

70
60
50
40
30
20
10
0

KHz

100    1000    10000    100000

**Fig. 28**

8

2

8

1A

7

1A

**Fig. 29**

Europäisches
Patentamt

European
Patent Office

Office européen
des brevets

# RAPPORT DE RECHERCHE EUROPEENNE

Numéro de la demande

EP 11 30 5753

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2008/137774 A1 (KIM TAE JIN [KR] ET AL) 12 juin 2008 (2008-06-12) * alinéa [0005] - alinéa [0011] * ----- | 1,7 | INV. G06K7/00 G06K19/07 H04L27/04 |
| A | EP 1 043 680 A1 (ST MICROELECTRONICS SA [FR]) 11 octobre 2000 (2000-10-11) * alinéa [0011] - alinéa [0047] * ----- | 1,7 | |

DOMAINES TECHNIQUES
RECHERCHES (IPC)

G06K
H04L
H04B

Le présent rapport a été établi pour toutes les revendications

| Lieu de la recherche | Date d'achèvement de la recherche | Examinateur |
|---|---|---|
| Munich | 17 novembre 2011 | Gronau, H |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 5753

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-11-2011

| Document brevet cité au rapport de recherche | | Date de publication | Membre(s) de la famille de brevet(s) | | Date de publication |
|---|---|---|---|---|---|
| US 2008137774 | A1 | 12-06-2008 | CN | 101262459 A | 10-09-2008 |
| | | | KR | 20080052703 A | 12-06-2008 |
| | | | TW | 200836529 A | 01-09-2008 |
| | | | US | 2008137774 A1 | 12-06-2008 |
| EP 1043680 | A1 | 11-10-2000 | EP | 1043680 A1 | 11-10-2000 |
| | | | FR | 2792130 A1 | 13-10-2000 |
| | | | JP | 2000341884 A | 08-12-2000 |
| | | | US | 6547149 B1 | 15-04-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1801741 A
- EP 11305453 A
- EP 113054548 A